(19) Europäisches Patentamt
European Patent Office
Office européen des brevets

(11) **EP 1 882 707 B1**

(12) **EUROPÄISCHE PATENTSCHRIFT**

(45) Veröffentlichungstag und Bekanntmachung des Hinweises auf die Patenterteilung:
**18.05.2016 Patentblatt 2016/20**

(51) Int Cl.:
*C08F 220/12* (2006.01)    *C08F 220/04* (2006.01)
*C08F 220/32* (2006.01)    *C08F 2/38* (2006.01)

(21) Anmeldenummer: **07112221.2**

(22) Anmeldetag: **11.07.2007**

(54) **Bimodale Acrylathaftklebemasse zur Verklebung von niederenergetischen und rauhen Oberflächen**

bimodal acrylate adhesive mass for gluing low energy and rough surfaces

masse auto-adhésive bimodale destinée au collage de surfaces à faible énergie et dures

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.07.2006 DE 102006034893**

(43) Veröffentlichungstag der Anmeldung:
**30.01.2008 Patentblatt 2008/05**

(73) Patentinhaber: **tesa SE**
**22848 Norderstedt (DE)**

(72) Erfinder:
• ZÖLLNER, Dr. Stephan
**21244, Buchholz /Nordheide (DE)**
• UTESCH, Nils, Dr.
**Hua Cao Town, Minhang District**
**201107 Shanghai (CN)**
• HUSEMANN, Dr. Marc
**22605, Hamburg (DE)**

(56) Entgegenhaltungen:
EP-A- 1 634 909    EP-A2- 0 528 304
WO-A-2004/056884    US-A- 4 501 845

**Beschreibung**

Die Erfindung betrifft Polyacrylate mit wenigstens bimodaler Molkulargewichtsverteilung auf Basis eines Monomerengemisches enthaltend Acrylsäure- und Methacrylsäureester sowie weitere olefinisch ungesättigte Monomere, ein Verfahren zur Herstellung derartiger Polyacrylate sowie von Haftklebemassen auf Basis vernetzter Polyacrylate der vorgenannten Art sowie die entsprechenden Haftklebemassen an sich.

Die stetig fortlaufende Miniaturisierung im Bereich elektronischer Artikel, beispielsweise aus den Bereichen der elektronischen Konsumerartikel ("Consumer Electronics"), Telekommunikation, Fahrzeugtechnik (Automotive) u.a. wirkt sich auf alle Einzelkomponenten eines Endproduktes aus und stellt auch an die Klebebandapplikationen hohe Anforderungen. Die logische Konsequenz aus den hier insbesondere geforderten geringeren Klebbanddicken von unter 20 $\mu$m sowie den minimierten Verklebungsflächen ist die Entwicklung von neuen, gut auffließenden und stark klebenden Haftklebern. Zu diesem Trend gesellt sich die stetig steigende industrielle Nachfrage nach Produkten mit deutlich verbesserter Haftung und Scherleistung bei erhöhten Temperaturen auf Substraten mit niedriger Oberflächenenergie (engl.: LSE, low-surface energy). Untergründe, die als niederenergetisch gelten, weisen häufig eine Oberflächenenergie von weniger als etwa 40 dyn/cm$^2$, oder sogar von weniger als 35 dyn/cm$^2$, auf. Zu den Materialien, die sich durch LSE-Oberflächen auszeichnen, gehören unter anderem UV-härtende Lacke, Pulverbeschichtungen, sowie Polyolefine wie Polypropylen (PP), Hochdruck-Polyethylen (LDPE), Niederdruck-Polyethylen (HDPE), ultrahochmolekulares Polyethylen (UHMWPE) und Polymere aus Ethylen-Propylen-Dien-Monomer (EPDM). Als besonders gelten Materialien, die neben einer niedrigen Oberflächenenergie zusätzlich rauhe Oberflächen und darüber hinaus geringe Härten, beispielsweise Shore A-Härten von weniger als 50, häufig sogar von weniger als 40, besitzen. Beispiele für diese Materialien sind offenzellige Schäume aus PE, EPDM, Polyester oder Polyurethan. Aufgrund der sich stetig verbessernden Eigenschaften und der relativ geringen Kosten finden diese Materialien in immer stärkerem Maße Verwendung in industriellen Applikationen, wodurch auch der Bedarf an geeigneten Haftklebelösungen wächst. Die Entwicklung von Klebstoffen gilt als anspruchsvoll, da die Parameter Adhäsion, Tack und Kohäsion nicht unabhängig voneinander eingestellt werden können. Im Speziellen ist eine Kombination aus hohem Schälwiderstand bei Raumtemperatur und statischem Scherwiderstand bei erhöhten Temperaturen schwer zu verwirklichen.
Die Herausforderung, einen Haftklebstoff für dünne Klebebänder zur Anwendung auf LSE-Untergründen zu entwickeln, liegt in der Forderung, ein Eigenschaftsprofil zu erzielen, welches eine sofortige, hohe und gleichmäßige Haftung mit einem gleichzeitig hohen statischen Scherwiderstand bei erhöhten Temperaturen vereint.

Blockcopolymerklebstoffe wurden vorgestellt, um die Eigenschaften von Haftklebemassen zu verbessern. Solche Blockcopolymerklebstoffe lassen sich im Allgemeinen mit Klebrigmachern so einstellen, daß hohe Schälwiderstände auf LSE-Untergründen erzielt werden können. Allerdings zeigen Blockcopolymerklebstoffe generell einen schlechten statischen Scherwiderstand bei erhöhten Temperaturen. Die vorstehende erläuterte Regel für Klebstoffe ist auch im Fall von Blockcopolymerklebstoffen gültig, d. h. je höher die Adhäsion bei Raumtemperatur, desto geringer die statische Scherleistung bei erhöhten Temperaturen.

Acrylathaftklebstoffe können so eingestellt werden, dass ein hoher statischer Scherwiderstand bei erhöhten Temperaturen erzielt wird, besitzen im Allgemeinen allerdings niedrige Schäladhäsion an LSE-Oberflächen. Klebriggemachte, auf Acrylat basierende Klebstoffe, wie jene, die im U.S.-Patent 5,602,221 (Bennett et al.) dargestellt sind, zeigen verbesserte Adhäsion an LSE-Untergründen. Allerdings genügen auch diese Klebstoffe nicht den verlangten Anforderungen an statischer Scherleistung bei erhöhten Temperaturen, zeigen niedrige Hafteigenschaften auf HDPE, und besitzen einen deutlichen Acrylatgeruch.

Polymergemische mit bimodaler Molmassenverteilung sind im Stand der Technik grundsätzlich bekannt. So beschreibt beispielsweise EP 0 528 304 A2 Bindemittel für bei Raumtemperatur trocknende Zweikomponenten-Polyurethan-Beschichtungsmittel, die aus einer hydroxyfunktionellen Polyacrylatkomponente und einer PolyisocyanatKomponente zusammengesetzt sind. Bei der Polyacrylatkomponente handelt es sich um ein Gemisch von mindestens zwei Hydroxylgruppen aufweisenden Harzen mit bimodaler Molekulargewichtsverteilung.

EP 1 634 909 A1 beschreibt eine Vernetzung von Polyacrylaten über einpolymerisierte Comonomere mit thermisch vernetzungsfähigen Gruppen und Comonomere mit gebundenen Photoinitiatoren, wodurch in einem ersten Schritt eine thermische und in einem zweiten Schritt eine UV-initiierte Vernetzung erreicht wird.

Polyacrylat-Klebemassen mit bimodaler Molmassenverteilung sind Gegenstand von US 4,501,845. Die darin beschriebenen Polymermassen sind als Kontaktklebstoffe nutzbar, insbesondere in Abmischung mit Amino- oder Phenoplasten als Klebkraftverstärker und Vernetzer sowie mit Verdickern wie Polyvinylalkohol.

Aus anderen Anforderungsbereichen sind Haftklebemassen mit einer bimodalen Molmassenverteilung bekannt. Die DE 102 59 458 A beschreibt eine bimodale Polyacrylat-Haftklebemasse, die mittels eines zweistufigen Polymerisationsverfahrens hergestellt wird und auf einem Monomerengemisch enthaltend (Meth-)Acrylsäureester und olefinisch ungesättigte Comonomere basiert. Diese Haftklebemassen werden bevorzugt aus der Schmelze verarbeitet. Durch den niedermolekularen Anteil wird die Fließviskosität abgesenkt, durch den hochmolekularen. Anteil wird eine hohe Scherfestigkeit nach entsprechender Vernetzung bevorzugt durch aktinische Strahlung für die Haftklebemasse erreicht.

Für das im Rahmen der vorliegenden Schrift dargestellte Anforderungsprofil ist es allerdings notwendig, die Kohäsionseigenschaften der Haftklebemassen weiter zu verbessern und die Haftklebemassen daher besser auf den vorgestellten Einsatzzweck einzustellen.

Insofern besteht weiterhin die Nachfrage nach einer Haftklebstoffzusammensetzung, die die Kombination aus hoher Adhäsion bei Raumtemperatur an LSE-Substraten und hoher Scherfestigkeit bei erhöhten Temperaturen aufweist.

Aufgabe der Erfindung ist es, die im Stand der Technik bestehenden Nachteile zu vermeiden und einen Haftkleber basierend auf einem Polyacrylat zur Verfügung zu stellen. Insbesondere sollen Haftklebemassen zur Verfügung gestellt werden, die hervorragend für die Verklebung auf unpolaren, niederenergetischen und/oder rauhen Untergründen geeignet sind.

Gelöst wird die Aufgabe durch Polyacrylate, die durch thermische Vernetzung mittels einpolymerisierter vernetzungsaktiver Comonomere zu Haftklebemassen mit einer bimodalen Molekulargewichtsverteilung und dem geforderten Anforderungsprofil modifiziert werden können, sowie durch ein Polymerisationsverfahren zur Herstellung von thermisch vernetzenden Polyacrylaten mit einer bimodalen Molekulargewichtsverteilung.

Somit können Haftklebemassen zur Verfügung gestellt werden, die neben guten klebtechnischen Eigenschaften auch hervorragende Kohäsionseigenschaften aufweisen und den Haftklebemassen aus dem Stand der Technik überlegen sind.

Entsprechend betrifft der erste Anspruch ein Polyacrylat

- mit wenigstens bimodaler Molekulargewichtsverteilung, charakterisiert durch zumindest zwei Maxima in der Molmassenverteilungskurve an den Stellen $M_1$ und $M_2$, mit $M_1 > M_2$,
- in dem formal betrachtet zumindest zwei Polymere $P_1$ und $P_2$ mit jeweils eigener Molekulargewichtsverteilung vorliegen, wobei das Polymer $P_1$ eine häufigste Molmasse $M_{max}(P_1)$ und das Polymer $P_2$ eine häufigste Molmasse $M_{max}(P_2)$ besitzt, wobei $M_{max}(P_1) > M_{max}(P_2)$,
- wobei beide Polymere $P_1$ und $P_2$ jeweils auf einem Monomerengemisch basieren, enthaltend

    (a) zumindest eine Monomersorte, gewählt aus der Gruppe der Acrylsäureester und der Methacrylsäureester der allgemeinen Formel

$$H_2C=CR^1\text{-}COOR^2$$

    wobei $R^1 = H$ oder $CH_3$ und wobei $R^2$ eine aliphatische Kohlenwasserstoffkette mit 4 bis 15 Kohlenstoffatomen darstellt;
    (b) zumindest Glycidylacrylat und/oder Glycidylmethacrylat.

Das Monomerengemisch der Polymere $P_1$ und $P_2$ kann darüber hinaus eine oder mehrere weitere olefinisch ungesättigte Monomersorten mit funktionellen Gruppen enthalten, wobei die funktionellen Gruppen der zumindest einen olefinisch ungesättigten Monomersorte solche sind, die für eine thermische Vernetzungsreaktion reagieren können, und wobei mindestens das Polymer $P_1$ einpolymerisierte Monomere der weiteren olefinisch ungesättigten Monomersorte mit für eine thermische Vernetzungsreaktion reaktiven Gruppen aufweist.

Im Rahmen der vorliegenden Schrift werden die Begriffe Molekulargewicht und Molmasse gleichbedeutend verwendet als Masse pro Stoffmenge.

Unter einem breiten bimodal verteilten Polyacrylat wird im Rahmen dieser Schrift ein solches verstanden, bei dem ein Polymer (Polymerisat, Molekulargewichtspopulation) mit einem relativ geringen mittleren Molekulargewicht (nachfolgend $P_2$) und ein Polymer (Polymerisat; Molekulargewichtspopulation) mit einem relativ hohen mittleren Molekulargewicht (nachfolgend $P_1$) nebeneinander vorhanden sind, insbesondere in der Form, dass die Maxima der beiden Molekulargewichtsverteilungen wenigstens 50.000 g/mol auseinanderliegen. Dies ist dadurch charakterisiert, dass das Polyacrylat in der Molmassenverteilungskurve (Auftragung der Anzahl der Moleküle einer Fraktion, also der Anzahl der Moleküle, die jeweils die gleiche Molmasse haben (y-Achse), gegen die im Polymerisat auftretenden Molmassen (x-Achse)], zwei ausgeprägte

Molekulargewichtspeaks besitzt, deren Maxima insbesondere zumindest 50.000 g/mol auseinanderliegen.

Unter den mittleren Molmassen $M_{max}(P_1)$ und $M_{max}(P_2)$ werden die Maxima der Verteilungskurven der entsprechenden, als frei, also nicht abgemischt vorliegend gedachten Polymere $P_1$ und $P_2$ verstanden ("häufigste Molmasse"). Im Wesentlichen, also unter Vernachlässigung des Effektes der überlappenden Verteilungskurven im Gemisch, entspricht die Größe $M_{max}(P_1)$ der Größe $M_1$ und die Größe $M_{max}(P_2)$ der Größe $M_2$. Berücksichtigt man die Addition der Häufigkeit der entsprechenden in beiden Polymeren auftretenden Molmassen im Überlappungsbereich, so kann es zu einer Verschiebung der Maxima kommen, so dass $M_{max}(P_1)$ und $M_{max}(P_2)$ nicht identisch sind mit $M_1$ beziehungsweise $M_2$.

In entsprechender Weise gilt für die gewichtsmittleren Molekulargewichte $M_w(P_1)$ des Polymers $P_1$ und $M_w(P_2)$

des Polymers $P_2$ die Beziehung $M_w(P_1) > M_w(P_2)$.

In besonders bevorzugter Form liegt das gewichtsmittlere Molekulargewicht des Polymers $P_1$ im Bereich von $M_w(P_1) =$ 800.000 g/mol bis 2.000.000 g/mol und das gewichtsmittlere Molekulargewicht des Polymers $P_2$ im Bereich von $M_w(P_2)$ = 50.000 bis 250.000 g/mol.

Es hat sich weiterhin als sehr vorteilhaft herausgestellt, wenn die Polydispersität des Polymers $P_1$ im Bereich von $D(P_1)$ = $M_w(P_1)/M_n(P_1) = 4$ bis 15 und die Polydispersität des Polymers $P_2$ im Bereich von $D(P_2) = M_w(P_2)/M_n(P_2) = 1,3$ bis 10, insbesondere bis 7 liegt.

Alle Molekulargewichts-Angaben (insbesondere des häufigsten Molekulargewichts $M_{max}$, des gewichtsmittleren Molekulargewichts $M_w$, des zahlenmittleren Molekulargewichts $M_n$ und der Polydispersität $D = M_w/M_n$) im Rahmen dieser Schrift beziehen sich auf die Ergebnisse aus der Gelpermeationschromatographie (Parameter vgl. Test D).

Die thermische Vernetzungsreaktion führt zur Vernetzung der Polymere und somit zur Kohäsionssteigerung des Polyacrylats.

Der Erfindung entsprechend umfasst ein weiterer Anspruch ein Verfahren zur Herstellung eines Polyacrylats mit wenigstens bimodaler Molekulargewichtsverteilung, charakterisiert durch zumindest zwei Maxima in der Molmassenverteilungskurve an den Stellen $M_1$ und $M_2$, mit $M_1 > M_2$,

bei dem ein Monomerengemisch enthaltend

(a) zumindest eine Monomersorte, gewählt aus der Gruppe der Acrylsäureester und der Methacrylsäureester der allgemeinen Formel

$$H_2C=CR^1\text{-}COOR^2$$

wobei $R^1$ = H oder $CH_3$ und wobei $R^2$ eine aliphatische Kohlenwasserstoffkette mit 4 bis 15 Kohlenstoffatomen darstellt;

(b) zumindest Glycidylacrylat und/oder Glycidylmethacrylat,

in einer wenigstens zweiphasigen radikalischen Polymerisation, bei der

s3) in der ersten Reaktionsphase zunächst eine geringe Initiatormenge zu der Monomermischung gegeben wird und ein erstes Polymerisat $P_1$ mit einer häufigsten Molmasse $M_{max}(P_1)$ hergestellt wird, und

s4) vor der vollständigen Umsetzung der Monomerenmischung durch wenigstens einmaligen Einsatz eines Reglers eine nächste Phase der Polymerisation gestartet wird, bei der ein zweites Polymerisat $P_2$ mit einer geringeren häufigsten Molmasse $M_{max}(P_2)$ hergestellt wird, so dass $M_{max}(P_1) > M_{max}(P_2)$,

zu einem Polyacrylat mit wenigstens bimodaler Molekulargewichtsverteilung polymerisiert wird, und bei dem das Polyacrylat in einer weiteren Phase s3 (nach Ablauf der Polymerisation) mittels thermischer Energie vernetzt wird.

Günstig kann das Verfahren so durchgeführt werden, dass das Polyacrylat vor Durchführung der Vernetzungsreaktion ein solches vernetzungsfähiges ist, wie es vorstehend erfindungsgemäß bereits dargestellt wurde.

Durch wiederholende Zugabe eines oder mehrerer Regler vor der Vernetzungsreaktion können weitere Polymerisationsphasen analog zu der Phase s2) durchgeführt werden, wobei sich weitere Polymerisate mit weiteren häufigsten Molmassen herstellen lassen. Auf diese Weise lassen sich durch das erfindungsgemäßen Verfahren Polyacrylate mit multimodaler Verteilung herstellen.

Es hat sich als vorteilhaft herausgestellt, wenn im Verlaufe des erfindungsgemäßen Verfahrens nachinitiiert wird, also eine weitere Menge an Initiator nachdosiert wird, sehr bevorzugt bei oder kurz nach Zugabe des Reglers (Phase s2 und ggf. weitere Phasen).

Das vernetzte Polyacrylat lässt sich hervorragend als Haftklebemasse verwenden, insbesondere auch für den in der Aufgabe gestellten Zweck. Zur Verbesserung der Eigenschaften der Haftklebemasse - auch in Hinblick auf ebendiese Verwendung - ist es sehr von Vorteil, wenn dem Polyacrylat (wie oben beschrieben und/oder erhältlich nach dem vorstehenden Verfahren) vor der thermischen Vernetzung zumindest ein klebrigmachendes Harz zugemischt wird, insbesondere mit einem Gewichtsanteil von bis zu 50 Gew.%, bezogen auf das Polyacrylat.

Thermische Vernetzungsreagenzien

Monomersorten im Sinne der Komponente (b), die für eine thermische Vernetzungsreaktion reaktive Gruppen aufweisen bzw. die für eine thermische Vernetzungsreaktion reagieren können, werden auch als einpolymerisierbare thermische Vernetzungsreagenzien bezeichnet. Die thermische Vernetzungsreaktion kann dabei bei Erreichen einer gewissen Reaktionstemperatur einsetzen, gegebenenfalls und abhängig von der Art der funktionellen Gruppen kann es auch notwendig oder vorteilhaft sein, die thermische Vernetzungsreaktion durch Zugabe entsprechender Katalysatoren zu unterstützen.

Der Anteil der copolymerisierbaren Vernetzungssubstanz (Komponente (b)) in der Klebemasse, im Falle mehrerer Verbindungen (b) der Anteil der copolymerisierbaren Vernetzungssubstanzen in Summe, beträgt vorteilhaft mindestens 0,5 Gew.-%, besser 1 Gew.-%, bevorzugt mindestens 1,5 Gew.-%, noch bevorzugter mindestens 2 Gew.-%.

Vorteilhaft sind solche copolymerisierbaren Vernetzungsreagenzien einsetzbar, deren reaktive Gruppe während der Polymerisation nicht reagiert, die aber während der thermischen Vernetzungsreaktion mit einem weiteren, der Masse zuzugebenden Vernetzungsreagenz reagieren kann; gegebenenfalls unter weiterer Einwirkung eines Katalysators. So kann beispielsweise ein hydroxylhaltiges Polymer (durch Einpolymerisierung von hydroxylhaltigen Comonomeren als copolymerisierbares thermisches Vernetzungsreagenz) nach Zugabe von Diisocyanat die thermische Vernetzung bewirken.

Erfindungsgemäß vorteilhaft können auch - statt des vorstehend ausgeführten oder zusätzlich - zumindest zwei olefinisch ungesättigte Monomersorten mit für eine thermische Vernetzungsreaktion reaktiven Gruppen vorliegen, wobei die reaktiven Gruppen der einen Polymersorte mit den reaktiven Gruppen der zweiten Polymersorte reagieren können. Hierdurch kann die Vernetzungsreaktion gegebenenfalls günstig gesteuert werden. Auch hier kann die Zugabe eines Katalysators vorteilhaft sein.

Die für die thermische Vernetzung reaktiven Gruppen sind dabei insbesondere derart zu wählen, dass sie unter den Bedingungen der Polymerisation nicht reagieren, sich also inert verhalten.

Weitere hervorragend im Sinne der vorliegenden Erfindung einpolymerisierbare Monomere, die funktionelle Gruppen aufweisen, sind beispielsweise

- Hydroxygruppenhaltige Monomere; diese reagieren insbesondere mit Epoxygruppen, Amidgruppen sowie Formaldehydkondensationsprodukten
- Epoxygruppenhaltige Monomere, diese reagieren insbesondere mit Säuregruppen, Anhydridgruppen, Aminogruppen. Als epoxygruppenhaltige Monomere können beispielsweise und vorteilhaft glycidylgruppenhaltige Monomere verwendet werden
- Amidgruppenhaltige Monomere; wie beispielsweise Methylolacrylamid, Methoxymethylacrylamid und Isobutoxymethylacrylamid; insbesondere zur Reaktion mit Epoxygruppen, Carboxylgruppen, Formaldehydkondensationsprodukten.
- Isocyanatgruppenhaltige Monomere; wie beispielsweise Isocyanatoethylmethacrylat; insbesondere zur Reaktion mit Hydroxygruppen, Säuregruppen, Aminogruppen, und Thiolen

Nachfolgend seien beispielhaft einige Verbindungen genannt, die sich hervorragend als weitere einpolymerisierbare thermische Vernetzungsreagenzien eignen:

β-Acrytoyioxypropionsäure, 2-(Trimethylsiloxy)ethylmethacrylat, 2-Hydroxyethylacrylat, 2-Hydroxyethylmethacrylat, 3-Methacryloxypropyltris(trimethylsiloxy)silan, 4-Hydroxybutyl-acrylat, 4-Vinylbenzoesäure, 6-Hydroxyhexylmethacrylat, Aconitsäure, Acrylamido-hydroxyessigsäure, Allylglycidylether, Crotonsäure, Acrylsäure, Methacrylsäure, Dimethylacrylsäure, Fumarsäure, Hydroxypropylacrylat, Itaconsäure, N-Methylolacrylamid, N-Methylolmethacrylamid, Trichloracrylsäure, 2-Acryloyloxypropylphthalate ("Viscoat 2100"), Butandiolmonoacrylat, Betacarboxyethylacrylat, Polyethoxymethacrylat, Glycerylallylether, Monoethylmaleat, Isocyanatoethylmethacrylat.

Die vorstehende Aufzählung ist nicht abschließend zu verstehen und soll die erfinderische Lehre nicht unnötig beschränken.

Als Monomersorte, die für eine thermische Vernetzungsreaktion reaktive Gruppen aufweist, kann für das erfindungsgemäße Verfahren besondes vorteilhaft Glycidylmethacrylat gewählt werden. Diese Verbindung ist auch sehr vorteilhaft im Sinne der weiter oben beschriebenen Komponente (b) für das noch zu vernetzende Polyacrylat, bei dem die reaktiven Gruppen in der Lage sind, mit sich selbst reagieren zu können. Das Glycidylmethacrylat kann dabei in das Polymere bzw. Polymerisat $P_1$ einpolymerisiert sein; insbesondere vorteilhaft ist es aber, wenn sowohl in das Polymere bzw. Polymerisat $P_1$ als auch in das Polymere bzw. Polymerisat $P_2$ Glycidylmethacrylat einpolymerisiert ist. Letzteres führt zu einer Vernetzungsreaktion der Polymere bzw. Polymerisate in sich als auch untereinander und führt daher zu einer noch verbesserten Kohäsion der Haftklebemasse, ohne dass deren klebtechnischen Eigenschaften dabei nachteilig beeinflusst würden.

Erfindungsgemäß bevorzugt können Katalysatoren vorhanden sein, die die thermische Vernetzungsreaktion unterstützen.

Insbesondere vorteilhaft kann man vorgehen, indem als Katalysator ein Aminomethacrylat (z.B. Dimethylaminoethylmethacrylat) anwesend ist.

Weiterhin vorteilhaft können als Katalysatoren Lewis-Säuren eingesetzt werden, so z.B. Zink- oder Magnesiumsalze, Bortrifluorid, die Bromide von Phosphor und Aluminium, die Chloride von Bor, Aluminium, Phosphor, Antimon, Arsen, Eisen, Zink, Zinn, weiterhin auch Supersäuren.

Bei dem Einsatz von Glycidylmethacrylat ist es sehr vorteilhaft, als weiteres copolymerisierbares Vernetzungsreagenz Acrylsäure im Sinne der Komponente (b) einzusetzen.

Besonders vorteilhaft geht man vor, indem der Anteil an Glycidylmethacrylat 1 bis 3 Gew.-% und der Anteil an Acrylsäure 0,5 bis 5, insbesondere bis 2 Gew-% beträgt. Gegenstand der Erfindung sind weiterhin vernetzte Polyacrylate und Haftklebemassen, die nach zumindest einer der Varianten des erfindungsgemäßen Verfahrens erhältlich sind.

Ganz besonders geeignet ist die erfindungsgemäße vernetzte Haftklebemasse für die Verwendung zur Verklebung auf unpolaren Untergründen, insbesondere solchen mit einer Oberflächenenergie von < 35 dyn/cm$^2$.

Das zu vernetzende Polyacrylat beziehungsweise das in dem erfindungsgemäßen Verfahren hergestellte Polyacrylat sollen im folgenden näher beschrieben werden, ohne sich unnötig beschränken zu wollen. In sofern gelten die folgenden Ausführungen gleichermaßen für das erfindungsgemäße, thermisch vernetzbare Polyacrylat sowie für im erfindungsgemäßen Verfahren hergestellte Polyacrylate.

**Polyacrylate**

Die Polydispersität der Polyacrylate erzielt wenigstens einen Wert von 6, typischerweise einen Wert von 8, und in einer besonders bevorzugten Ausführungsform ist sie größer als 12. (Angegeben ist hier die Polydispersität über alle Polymermoleküle "ohne Rücksicht" auf die Bimodalität; also nicht für die Komponenten $P_1$ und $P_2$ getrennt angegeben. Entsprechend sind die Angaben der Polydispersität in Tabelle 1 zu verstehen).

Bei den Monomeren der Komponente (a) handelt es sich um Acrylsäure- und/oder Methacrylsäureester mit 4 bis 15, insbesondere vorteilhaft 4 bis 9 Kohlenstoffatomen im Esterrest ($R^2$). Bei dem Rest $R^2$ handelt es sich um einen aliphatischen Kohlenwasserstoffrest, der insbesondere gesättigt und linear oder verzweigt oder auch cyclisch ist.

Die Monomere der Komponente (a) sind insbesondere weichmachende und/oder unpolare Monomere. Ihre Zusammensetzung in der Monomermischung wird bevorzugt dermaßen gewählt, dass die resultierenden Polymere bei Raumtemperatur oder höheren Temperaturen als Haftklebemassen eingesetzt werden können, also derart, dass die resultierenden Polymere haftklebrige Eigenschaften besitzen.

In einer sehr bevorzugten Weise werden für (a) Acryl- oder Methacrylmomonere eingesetzt, die aus Acryl- und Methacrylsäureestern mit Alkylgruppen aus 4 bis 15 C-Atomen bestehen, bevorzugt 4 bis 9 C-Atomen. Beispiele für erfindungsgemäß günstig einsetzbare Monomere, ohne sich durch diese Aufzählung einschränken zu wollen, sind n-Butylacrylat, n-Butylmethacrylat, n-Pentylacrylat, n-Pentylmethacrylat, n-Amylacrylat, n-Hexylacrylat, Hexylmethacrylat, 2-Ethylbutylmethacrylat, n-Heptylacrylat, n-Octylacrylat, n-Octylmeth-acrylat, n-Nonylacrylat, Isobutylacrylat, 2-Ethylhexylacrylat, 2-Ethylhexylmethacrylat, Isooctylacrylat, Isooctylmethacrylat.

Die Monomere der Komponente (a) machen vorteilhaft mindestens 50 Gew.-% der Monomermischung aus. Die Obergrenze ergibt sich aus der Differenz zu den eingesetzten Verbindungen der Komponente (b) (siehe weiter oben) und gegebenenfalls weiter eingesetzten Comonomeren (c).

Die Monomermischung kann weitere Comonomere (c) enthalten. Diese Comonomere werden derart gewählt, dass sie mit den Monomeren der Komponente (a) und/oder den Monomeren der Komponente (b) copolymerisierbar sind, und können auch zur Einstellung der Eigenschaften der resultierenden Haftklebemasse dienen.

Prinzipiell können im Sinne der Komponente (c) alle vinylisch-funktionalisierten Verbindungen eingesetzt werden, die mit der Komponente (a) und/oder der Komponente (b) copolymerisierbar sind. Je nach Auswahl der Verbindungen der Komponente (b) kann die Komponente (c) auch Verbindungen umfassen, die zwar per se - be Anwesenheit geeigneter Reaktionspartner als thermische Vernetzungsreagenzien fungieren könnten, dieses aber aus Mangel an geeigneten Reaktionspartnern nicht können (wie beispielsweise Acrylsäure ohne das geeignete "Counterpart"). Diese Verbindungen können dann ebenfalls als Monomere im Sinne der Komponente (c) aufgefasst werden, so dass eine Zuordnung zu der Gruppe (b) einer Zuordnung zu der Gruppe (c) in Fällen anderer Zusammensetzung der Klebmasse nicht widerspricht.

Beispielhaft und ohne sich im Erfindungsgedanken unnötig einschränken zu wollen seinen im Folgenden auch für die Monomere (c) spezifische Verbindungen genannt, die einzeln oder in Kombination miteinander als Comonomere hervorragend eingesetzt werden können:

3,3,5-Trimethylcyclohexylacrylat, 3,5-Dimethyladamantylacrylat, 4-Cumylphenylmethacrylat, Behenylacrylat, Cyclohexylmethacrylat, Cyclopentylmethacrylat, Dodecylmethacrylat, Ethylacrylat, Isobornylacrylat, Isobornylmethacrylat, Isodecylacrylat, Laurylacrylat, Methylacrylat, Methylmethacrylat, n-Undecylacrylat, Propylmethacrylat, Stearylacrylat, tert.-Butylacrylat, Tridecylacrylat, Cyanoethylacrylat, Cyanoethylmethacrylat, Tetrahydrofufurylacrlyat, Trichloracrylsäure, Acrylonitril, Ethylvinylether, Vinylacetat, Vinylchlorid, Vinylessigsäure, Vinylester, Vinylether, Vinylformamid, Vinylhalogenide, Vinylidenchlorid, Vinylidenhalogenide, Vinylpyridin, 4-Vinylpyridin, N-Vinylphthalimid, Methylstyrol, 3,4-Dimethoxystyrol, Benzylacrylat, Benzylmethacrylat, Phenylacrylat, Phenylmethacrylat, t-Butylphenylacrylat, t-Butylphenylmethacrylat, p-Biphenylacrylat, p-Biphenylmethacrylat, 2-Naphthylacrylat 2-Naphthylmethacrylat, Diethylaminoethylacrylat, Diethylaminoethylmethacrylat, Dimethylaminoethylacrylat, Dimethylaminoethylmethacrylat, Dimethylaminopropylacrylamid, N-(n-Butoxymethyl)acrylamid, Dimethyla.minopropyl-methacrylamid, N-(1-Methylundecyl)-acrylamid, N-(Butoxymethyl)methacrylamid, N-(Ethoxymethyl)acrylamid, N-(n-Octadecyl)acrylamid, weiterhin N,N-Dialkylsubstituierte Amide, wie beispielsweise N,N-Dimethylacrylamid, N,N-Dimethylmethacrylamid, N-Benzylacrylamide, N-Isopropylacrylamid,

weiterhin N-Methylolacrylamid, N-Methylolmethacrylamid, N-tert.-Butylacrylamid, N-tert-Octylacrylamid, N-Vinyllactam, N-Vinylpyrrolidon, 2-Butoxyethylacrylat, 2-Butoxy-ethylmethacrylat, 3-Methoxyacrylsäuremethylester, 3-Methoxybutylacrylat, Phenoxy-ethylacrlylat, Phenoxyethylmethacrylat, 2-Phenoxyethylmethacrylat, Butyldiglykolmethacrylat, Ethylenglycolacrylat, Ethylenglycolmonomethylacrylate, Methoxy Polyethylenglykol-methacrylat 350, Methoxy Polyethylenglykolmethacrylat 500, Propyleneglycolmono-methacrylat, Butoxydiethylenglykolmethacrylat, Ethoxytriethylenglykolmethacrylat, Octa-fluoropentylacrylat,

Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat.

## Klebrigmachende Harze

Vorteilhaft wird den durch das erfindungsgemäße Verfahren erhältlichen Polyacrylaten vor der thermischen Vernetzung zumindest ein klebrigmachendes Harz beigemischt. Als zuzusetzende klebrigmachende Harze sind die vorbekannten und in der Literatur beschriebenen Klebharze einsetzbar. Bevorzugt lassen sich Pinen-, Inden- und Kolophoniumharze einsetzen, deren disproportionierte, hydrierte, polymerisierte, veresterte Derivate und Salze, die aliphatischen und aromatischen Kohlenwasserstoffharze, Terpenharze und Terpenphenolharze sowie C5-, C9- und andere Kohlenwasserstoffharze. Auch Kombinationen dieser und weiterer Harze können vorteilhaft- eingesetzt werden, um die Eigenschaften der resultierenden Klebmasse wunschgemäß einzustellen. Im Allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

In einer besonders bevorzugten Vorgehensweise werden Terpenphenolharze und/oder Kolophoniumester hinzugesetzt.

Den Haftklebemassen können optional Weichmacher (Plastifizierungsmittel, wie beispielsweise Phosphate, Phthalate, Citrate), weitere Füllstoffe (wie z. B. organische und/oder anorganische Nanopartikel, Fasern, Ruß, Zinkoxid, Kreide, Voll- oder Hohlglaskugeln, Mikrokugeln aus anderen Materialien, Kieselsäure, Silikate, organische nachwachsende Rohstoffe wie z.B. Holzmehl), Keimbildner, elektrisch leitfähige Materialien (wie z.B. konjugierte Polymere, dotierte konjugierte Polymere, Metallpigmente, Metallpartikel, Graphit, Carbon Nanotubes, Fullerene), thermisch leitfähige Materialien (wie z.B. Bornitrid, Aluminiumoxid, Siliciumcarbid), Blähmittel, Compoundierungsmittel und/oder Alterungsschutzmittel (z.B. in Form von primären und sekundären Antioxidantien) und/oder Lichtschutzmittel zugesetzt sein.

Die thermische Vernetzung der Polyacrylate kann zusätzlich durch eine mittels aktinischer Strahlung hervorgerufene Vernetzung unterstützt werden. Weiterhin können dem Polyacrylat entsprechend Vernetzer und Vernetzungs-Promotoren beigemischt werden. Geeignete Vernetzer für die Elektronenstrahlvernetzung und UV-Vernetzung sind beispielsweise bi- oder multifunktionelle Acrylate.

Die thermische, durch copolymerisierbare Vernetzungssubstanzen bewirkte Vernetzung der Polyacrylate kann zudem durch zugesetzte, nicht polymerisierbare thermisch aktivierbare Vernetzer verstärkt werden, beispielsweise mittels bi- oder multifunktioneller Isocyanate (auch in blockierter Form) und/oder bi- oder multifunktioneller Epoxide und/oder z.B. Lewis-Säuren und/oder Metallchelaten.

Für einer zusätzliche optionale Vernetzung mit UV-Licht können den Haftklebemassen UV-absorbierende-Photoinitiatoren zugesetzt und/oder einpolymerisiert- werden: Nützliche Photoinitiatoren, welche sehr gut zu verwenden sind, sind Benzoinether, wie-z. B. Benzoinmethylether und Benzoinisopropylether, substituierte Acetophenone, wie z. B. 2,2-Diethoxyacetophenon, 2,2-Dimethoxy-2-phenyl-1-phenylethanon, Dimethoxyhydroxy-acetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim. Geeignete copolymerisierbare Photoinitiatoren sind beispielsweise Benzoinacrylat und acrylatfunktionalisierte Benzophenonderivate.

## Herstellverfahren für die Acrylathaftklebemassen

Zur Erzielung einer für Haftklebemassen bevorzugten Glasübergangstemperatur $T_G$ der Polymere von $T_G \leq$ 25 °C werden entsprechend dem vorstehend gesagten die Monomere sehr bevorzugt derart ausgesucht und die mengenmäßige Zusammensetzung der Monomermischung vorteilhaft derart gewählt, daß sich nach der Gleichung (G1) (in Analogie zur *Fox*-Gleichung, vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Die Polymerisation kann in Polymerisationsreaktoren durchgeführt werden, die im Allgemeinen mit einem Rührer, mehreren Zulaufgefäßen, Rückflusskühler, Heizung und Kühlung versehen sind und für das Arbeiten unter $N_2$-Atmosphäre und Überdruck ausgerüstet sind.

Zur Herstellung der Poly(meth)acrylathaftklebemassen werden vorteilhaft konventionelle radikalische Polymerisationen durchgeführt. Für die radikalisch verlaufenden Polymerisationen- werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist beispielsweise im Houben Weyl, Methoden der Organischen Chemie, Vol. E 19a, S. 60 - 147 beschrieben. Diese Methoden werden in bevorzugter Weise in Analogie angewendet.

Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Cyclohexylsulfonylacetylperoxid, Diisopropyl-percarbonat, t-Butylperoktoat, Benzpinacol. In einer sehr bevorzugten Vorgehensweise wird als radikalischer Initiator 2,2'-azobis(2-methylbutyronitril) (Vazo 67™ der Fa. DuPont) oder Azodüsobutyronitril (AIBN) verwendet.

Für die Herstellung der bimodalen Acrylathaftklebemassen können zwei Verfahren vorteilhaft angewandt werden:

I) Mischung zweier Polyacrylate mit unterschiedlicher Molekulargewichtszusammensetzung, insbesondere wobei sich die beiden Polymerisationspeaks im GPC um mindestens 50.000 g/mol unterscheiden;

II) Radikalisches Polymerisationsverfahren zur Herstellung von Polyacrylaten mit Einsatz eines Reglers während der Polymerisation zu Herstellung der bimodalen Acrylathaftklebemasse

Für I) werden insbesondere zwei Polyacrylate $P_1$ und $P_2$ polymerisiert, die ein gewichtsmittleres Molekulargewicht $M_w$ in einem Bereich von 50.000 bis 4.000.000 g/mol aufweisen. Die Bestimmung des mittleren Molekulargewichtes erfolgt über Größenausschlusschromatographie (GPC). Für die Polymere $P_1$ und $P_2$ gelten die bereits dargestellten Bedingungen; insbesondere dass sich die Lagen der Molekulargewichtspeaks ($M_1$ und $M_2$) in der Molmassenverteilungskurve um mindestens 50.000 g/mol unterscheiden.

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind beispielsweise reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol, Ethylenglycol, Ethylenglycolmonomethylether) und Ether (z.B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Die Initiierung der Polymerisation erfolgt insbesondere mittels thermisch zerfallender Initiatoren. Die. Polymerisation kann durch Erwärmen, z.B. auf 50 bis 100 °C, je nach Initiatortyp, initiiert werden.

Für II) wird in einer bevorzugten Ausführungsform des erfindungsgemäßen Verfahrens in der ersten Phase (s1) das Molverhältnis von Initiator zu Monomer kleiner 0,005, besonders bevorzugt bei kleiner 0,003 gewählt. Die Initiatorzugabe in der ersten Phase kann in einem oder in mehreren Schritten erfolgen. Als Initiatoren werden besonders bevorzugt Azobisisobutyronitril (AIBN) oder 2,2'-azobis(2-methylbutyronitril) Vazo 67™ (Fa. DuPont) eingesetzt.

In der zweiten Phase (s2) werden der Polymerisation Regler zur Molekulargewichtssenkung beigesetzt. In der zweiten Phase - und gegebenenfalls in weiteren Polymerisationsphasen - kann ebenfalls in einem oder in mehreren Schritten eine Initiatorzugabe erfolgen, wobei insbesondere ebenfalls die vorgenannten Initiatoren eingesetzt werden können..

Es wird insbesondere so vorgegangen, dass zumindest eine der Phasen (s1) und/oder s(2), bevorzugt die zweite Phase (s2), mittels einer kontrollierten radikalischen Polymerisation erzeugt wird.

Insbesondere bevorzugt geht man vor, indem als sogenannte Polymerisationsregler z.B. Alkohole, Ether, Dithioether, Dithiocarbonate, Trithiocarbonate, Nitroxide, Alkylbromide, Thiole, TEMPO (2,2,6,6-tetramethyl-piperidine-1-oxyl) und TEMPO-Derivate hinzugesetzt werden. In besonders bevorzugten Variante des erfindungsgemäßen Verfahrens werden Isopropanol, Dithiobenzoesäurebenzylester, Dithioessigsäureethylester, Bis-2,2'-phenylethylthiocarbonat oder Dibenzyltrithiocarbonat als Regler verwendet. Die Zugabe des Reglers erfolgt bevorzugt frühestens nach einer Stunde Polymerisationszeit, aber spätestens 2 h vor dem Reaktionsende. Mit dem Zugabezeitpunkt kann die Molekulargewichtsverteilung gesteuert werden. Je später je Zugabe des Reglers erfolgt, desto geringer wird der niedermolekulare Anteil des Polyacrylates. Die Menge des Reglers richtet sich nach der Effizienz, wobei mindestens 0,01 Gewichtsanteile bezogen auf die Monomere eingesetzt werden. Für den besonders bevorzugten Regler Isopropanol werden zwischen 3 und 30, besonders bevorzugt zwischen 5 und 25 Gewichtsanteile Isopropanol, bezogen auf die Monomere, eingesetzt.

In einer alternativen Vorgehensweise kann das Polymerisationsverfahren zur kontrolliert radikalischen Polymerisation durch Zugabe von regelnden Reagenzien aus weiteren vorbekannten, hierfür geeigneten Verfahren ausgewählt werden, wie sie beispielsweise in der EP 1 361 260 B1, Seite 6, Textabschnitt [0041] bis Seite 8, Textabschnitt [0048] incl. dargestellt sind. Diese dort beschriebenen Regler und Verfahren sind daher in den Offenbarungsgehalt der vorliegenden Schrift explizit eingebunden.

Weiterhin kann es von Vorteil sein, dass zur Umsatzerhöhung ein Initiator hinzugesetzt wird, der eine Vernetzungseffizienz von größer 5 besitzt. Solche Initiatoren sind z.B. Di-(4-tert-butylcyclohexyl) peroxydicarbonat (z.B. Perkadox 16™ der Fa. Akzo Nobel).

## Herstellung der Klebebänder

Die erfindungsgemäße Haftklebemasse kann besonders bevorzugt für die Herstellung von Haftklebebändern eingesetzt werden. Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien, Papiere sowie Trennpapiere (Glassine, HDPE, LDPE) verwenden. Diese Aufzählung soll nicht abschließend sein. Auf diesem Wege können einseitige, doppelseitige und Transferklebebänder hergestellt werden.

Für aus der Lösung beschichtete Haftklebemasse wird in einem Trockenkanal bei erhöhten Temperaturen das Lösemittel entfernt. Weiterhin kann die eingeführte Energie zur thermischen Vernetzung verwendet werden.

## Verwendung

Weiterhin betrifft die Erfindung die Verwendung einer das erfindungsgemäße Polyacrylat enthaltenden Haftklebemasse zur Verklebung auf unpolaren Untergründen. Unpolare Untergründe kennzeichnen sich insbesondere durch eine Oberflächenenergie von weniger (als 35 dyn/cm$^2$ aus.) Zu den Materialien, die sich durch LSE-Oberflächen ("low surface-energy") auszeichnen und durch die erfindungsgemäßen haftklebemassen hervorragend verklebt- werden können, gehören UV-härtende Lacke, Pulverbeschichtungen, sowie Polyolefine wie Polypropylen (PP), Hochdruck-Polyethylen (LDPE), Niederdruck-Polyethylen (HDPE), ultrahochmolekulares Polyethylen (UHMWPE) und Polymere aus Ethylen-Propylen-Dien-Monomer (EPDM). Die erfindungsgemäße Haftklebemasse ist auch hervorragen geeignet zur Verklebung der als besonders kritisch gelten Materialien, die eine niedrigen Oberflächenenergie oder/auch eine rauhe Oberflächen aufweisen und darüber hinaus geringe Shore-A-Härten von weniger als 50, typischerweise weniger als 40 besitzen. Beispiele für diese Materialien sind offenzellige Schäume aus Polyethylen (PE), EPDM, Polyester oder Polyurethan.

In einer besonders vorteilhaften Umsetzung werden bereits sofort nach der Verklebung hohe Klebkraftwerte realisiert. Die Erfindung umfasst aber auch die Verwendung der Haftklebemasse unter Realisierung hoher Verklebungskräfte nach dem vollständigen Aufziehen der Masse.

**Beispiele**

Die folgenden beispielhaften Experimente sollen den Inhalt der Erfindung näher erläutern, ohne durch die Wahl der Beispiele die Erfindung unnötig einschränken zu wollen.

Testmethoden

Zur Charakterisierung der Polyacrylatmassen und deren vernetzter Produkte dienten die im Folgenden dargestellten Testmethoden.

*Scherfestigkeit (Test A)*

Ein 13 mm breiter Streifen des Klebebandes wurde auf eine glatte und gereinigte, senkrecht hängende Stahloberfläche aufgebracht. Die Auftragsfläche betrug 20 mm x 13 mm (Länge x Breite). Anschließend wurde bei Raumtemperatur ein 1 kg-Gewicht an dem Klebeband befestigt und die Zeit bis zum Abfallen des Klebebandes von der Stahlplatte gemessen.

*SAFT Test (Shear Adhesion Failure Temperature) liest B)*

Dieser Test dient der Schnellprüfung der Scherfestigkeit von Klebebändern unter Temperaturbelastung.
Messprobenpräparation: Die Klebebandprobe (auf 50 $\mu$m PET-Folie beschichtete Haftklebemasse) wird auf eine geschliffene, temperierbare, mit Aceton gereinigte Stahl-Prüfplatte verklebt und anschließend mit einer 2 kg-Stahlrolle und einer Geschwindigkeit von 10 m/min sechsmal überrollt. Die Verklebungsfläche der Probe beträgt Höhe x Breite = 13 mm x 10 mm, die Probe wird senkrecht aufgehängt, überragt am oberen Rand die Stahl-Prüfplatte um 2 mm und wird bündig mit einem stabilen Klebestreifen verstärkt, der als Auflage für den Wegmessfühler dient.
Messung: Die zu messende Probe wird am unteren Ende mit einem Gewicht von 50 g belastet. Die Stahl-Prüfplatte mit der verklebten Probe wird beginnend bei 25 °C mit einer Rate von 9 °C pro Minute auf die Endtemperatur von 200 °C aufgeheizt. Gemessen wird der Rutschweg der Probe mittels Wegmessfühler in Abhängigkeit von Temperatur und Zeit. Der maximale Rutschweg ist auf 1000 $\mu$m festgelegt, bei Überschreiten wird der Test abgebrochen. Prüfklima: Raumtemperatur 23 $\pm$ 3 °C, relative Luftfeuchtigkeit 50 $\pm$ 5 %.

Positives Testergebnis:

- Rutschweg nach Erreichen der Endtemperatur (200 °C) angegeben in $\mu$m.

Negatives Testergebnis:

- Temperatur bei Erreichen des maximalen Rutschweges (1000 $\mu$m) angegeben in °C.

*180° Klebkrafttest (Test C)*

Ein 20 mm breiter Streifen einer auf Polyester als Schicht aufgebrachten Acrylathaftklebemasse wurde auf eine HDPE-Platte (High-Density-Polyethylene) aufgebracht, die zuvor zweimal mit Aceton und einmal mit Isopropanol gewaschen worden waren. Der Haftklebestreifen wurde zehnmal mit einem 4 kg Gewicht auf das Substrat aufgedrückt. Das Klebeband wurde anschließend sofort mit 300 mm/min und in einem Winkel von 180° vom Substrat abgezogen.
Die Messergebnisse sind in N/cm angegeben und sind gemittelt aus drei Messungen. Alle Messungen wurden bei Raumtemperatur unter klimatisierten Bedingungen durchgeführt.

*Gelpermeationschromatographie (Test D)*

Die Molekulargewichtsbestimmung (insbesondere die Bestimmung des häufigsten Molekulargewichts $M_{max}$ und des gewichtsmittleren Molekulargewichtes $M_w$), der Polydispersität D, der Molmassenverteilung und der Molmassenverteilungskurve erfolgte mittels Gelpermeationschromatographie (GPC). Als Eluent wurde THF (Tetrahydrofuran) mit 0,1 Vol.% Trifluoressigsäure eingesetzt. Die Messung erfolgte bei 25 °C. Als Vorsäule wurde PSS-SDV, Partikelgröße 5 $\mu$m, Porosität $10^3$ Å (0,1 $\mu$m), ID 8,0 mm x 50 mm verwendet. Zur Auftrennung wurden die Säulen PSS-SDV, Partikelgröße 5 $\mu$m, Porosität $10^3$ Å (0,1 $\mu$m) sowie $10^5$ Å (10 $\mu$m) und $10^6$ Å (100 $\mu$m) mit jeweils ID 8,0 mm x 300 mm eingesetzt. Die Probenkonzentration betrug 4 g/l, die Durchflußmenge 1,0 ml pro Minute. Es wurde gegen PMMA-Standards gemessen.

Untersuchte Proben

Die für die Experimente verwendeten Proben wurden wie folgt hergestellt.

Referenz 1

Ein für radikalische Polymerisationen konventioneller 2 L-Glasreaktor wurde mit 20 g Acrylsäure, 380 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58 °C geheizt und 0,2 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 2,5 h Reaktionszeit wurde mit 100 g Aceton verdünnt. Nach 4 h Reaktionszeit wurden nochmals 0,2 g Vazo 67™ hinzugegeben. Nach 5 h Polymerisationszeit wurde mit 100 g Aceton, nach 6 h mit 100 g Siedegrenzbenzin 60/95 verdünnt. Nach 24 h Reaktionszeit wurde die Polymerisation abgebrochen und das Reaktionsgefäß auf Raumtemperatur abgekühlt. Das Polymer wurde nach Testmethode D analysiert.

Anschließend wurde das Polymer mit 37,5 Gew.-% Sylvares TP 95 (Terpen-Phenol-Harz mit einer Erweichungstemperatur von 95 °C) und 0,3 Gew.-% Al(acac)$_3$ [acac = Acetylacetonat] abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Referenz 1a

Ein für radikalische Polymerisationen konventioneller 2 L-Glasreaktor wurde mit 20 g Acrylsäure, 380 g 2-Ethylhexylacrylat, 67 g Siedegrenzbenzin 69/95, 67 g Aceton und 133 g Isopropanol befüllt. Nachdem 45 Minuten Stickstoffgas unter Rühren durch die Reaktionslösung geleitet worden war, wurde der Reaktor auf 58 °C geheizt und 0,2 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 4 h Reaktionszeit wurden nochmals 0,2 g Vazo 67™ hinzugegeben. Nach 24 h Reaktionszeit wurde die Polymerisation abgebrochen und das Reaktionsgefäß auf Raumtemperatur abgekühlt.

In einer zweiten radikalischen Polymerisation in einem konventionellen 2 L-Glasreaktor wurde mit 20 g Acrylsäure, 380 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58 °C geheizt und 0,2 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 2,5 h Reaktionszeit wurde mit 100 g Aceton verdünnt. Nach 4 h Reaktionszeit wurden nochmals 0,2 g Vazo 67™ hinzugegeben. Nach 5 h Polymerisationszeit wurde mit 100 g Aceton, nach 6 h mit 100 g Siedegrenzbenzin 60/95 verdünnt. Nach 24 h Reaktionszeit wurde die Polymerisation abgebrochen und das Reaktionsgefäß auf Raumtemperatur abgekühlt. Anschließend wurden beide Polymerisate homogen miteinander im Verhältnis 1:1 gemischt.

Anschließend wurde das Polymergemisch mit 37,5 Gew.-% Sylvares TP 95 (Terpen-Phenol-Harz mit einer Erweichungstemperatur von 95 °C) und 0,3 Gew.-% Al(acac)$_3$ abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Referenz 1b

Ein für radikalische Polymerisationen konventioneller 2 L-Glasreaktor wurde mit 20 g Acrylsäure, 380 g 2-Ethylhexylacrylat und 266 g Isopropanol befüllt. Nachdem 45 Minuten Stickstoffgas unter Rühren durch die Reaktionslösung geleitet worden war, wurde der Reaktor auf 58 °C geheizt und 0,2 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 4 h Reaktionszeit wurden nochmals 0,2 g Vazo 67™ hinzugegeben. Nach 24 h Reaktionszeit wurde die Polymerisation abgebrochen und das Reaktionsgefäß auf Raumtemperatur abgekühlt.

In einer zweiten radikalischen Polymerisation in einem konventionellen 2 L-Glasreaktor wurde mit 20 g Acrylsäure, 380 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58 °C geheizt und 0,2 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 2.5 h Reaktionszeit wurde mit 100 g Aceton verdünnt. Nach 4 h Reaktionszeit wurden nochmals 0,2 g Vazo 67™ hinzugegeben. Nach 5 h Polymerisationszeit wurde mit 100 g Aceton, nach 6 h mit 100 g Siedegrenzbenzin 60/95 verdünnt. Nach 24 h Reaktionszeit wurde die Polymerisation abgebrochen und das Reaktionsgefäß auf Raumtemperatur abgekühlt. Anschließend wurden beide Polymerisate homogen miteinander im Verhältnis 1:1 gemischt.

Anschließend wurde das Polymergemisch mit 37,5 Gew.-% Sylvares TP 95 (Terpen-Phenol-Harz mit einer Erweichungstemperatur von 95 °C) und 0,3 Gew.-% Al(acac)$_3$ abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Referenz 1c

Ein für radikalische Polymerisationen konventioneller 2 L-Glasreaktor wurde mit 20 g Acrylsäure, 380 g 2-Ethylhexylacrylat, 133 g Siedegrenzbenzin 69/95 und 133 g Aceton befüllt. Nachdem 45 Minuten Stickstoffgas unter Rühren durch die Reaktionslösung geleitet worden war, wurde der Reaktor auf 58 °C geheizt und 0,2 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurden 60 g Isopropanol hinzugegeben. Nach 2,5 h wurde mit 100 g Aceton verdünnt. Nach 4 h Reaktionszeit wurden nochmals 0,2 g Vazo 67™ (Fa. DuPont) hinzugegeben. Nach 7 h Polymerisationszeit wurde mit 100 g Siedegrenzbenzin 60/95, nach 22 h mit 100 g Aceton verdünnt. Nach 24 h Reaktionszeit wurde die Polymerisation abgebrochen und das Reaktionsgefäß auf Raumtemperatur abgekühlt. Das Polymer wurde nach Testmethode C analysiert.

Anschließend wurde das Polymer mit 37,5 Gew.-% Sylvares TP 95 (Terpen-Phenol-Harz mit einer Erweichungstemperatur von 95°C) und 0,3 Gew.-% Al(acac)$_3$ abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Referenz 1d

Ein für radikalische Polymerisationen konventioneller 2 L-Reaktor wurde mit 21,7 g Acrylsäure, 411,3 g 2-Ethylhexylacrylat, 116,5 g Aceton und 116,5 g Siedegrenzbenzin 60/95 befüllt. Nachdem 45 Minuten Stickstoffgas unter Rühren durch die Reaktionslösung geleitet worden war, wurde der Reaktor auf 58 °C geheizt und 0,21 g Vazo 67™ (Fa. DuPont) hinzugegeben. Anschließend wurde das äußere Heizbad auf 75 °C erwärmt und die Reaktion konstant bei dieser Außentemperatur durchgeführt. Nach 1 h Reaktionszeit wurden 0,21 g Vazo 67™ (Fa. DuPont) hinzugegeben. Nach 1,5 h Reaktionszeit wurden 0,013 g Bis-2,2'-phenylethyltrithiocarbonat hinzugegeben. Nach 7 h Polymerisationszeit wurde mit 50 g Siedegrenzbenzin 60/95, nach 22 h mit 100 g Aceton verdünnt. Nach 24 h Reaktionszeit wurde die Polymerisation abgebrochen und das Reaktionsgefäß auf Raumtemperatur abgekühlt. Das Polymer wurde nach Testmethode C analysiert.

Anschließend wurde das Polymer mit 37,5 Gew.-% Sylvares TP 95 (Terpen-Phenol-Harz mit einer Erweichungstemperatur von 95 °C) und 0,3 Gew.-% Al(acac)$_3$ abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Referenz 2

In einer radikalischen Polymerisation in einem konventionellen 200 L-Reaktor wurden 0,7 kg Acrylsäure, 33,95 kg 2-Ethylhexylacrylat, 33,95 kg Butylacrylat, 1,4 kg Gylcidylmethacrylat und 23,35 kg Siedegrenzbenzin 60/95 sowie 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,5 h Reaktionszeit wurden 10,50 kg Siedegrenzbenzin 60/95 als Verdünnung hinzugegeben. Eine weitere Verdünnung erfolgte nach 7,5 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt. Das Polymer wurde nach Testmethode C analysiert.

Anschließend wurde das Polymer mit 37,5 Gew.-% Sylvares TP 95 (Terpen-Phenol-Harz mit einer Erweichungstemperatur von 95 °C) und 0,3 Gew.-% ZnCl$_2$ abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Beispiel 2a

Ein für radikalische Polymerisationen konventioneller 200 L-Reaktor wurde mit 0,7 kg Acrylsäure, 33,95 kg 2-Ethylhexylacrylat, 33,95 kg Butylacrylat, 1,4 kg Gylcidylmethacrylat und 23,35 kg Siedegrenzbenzin 60/95 sowie 23,35 kg Isopropanol befüllt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 24 h Reaktionszeit wurde die Polymerisation abgebrochen und das Reaktionsgefäß auf Raumtemperatur abgekühlt. Das Polymer wurde nach Testmethode C analysiert.

In einer zweiten radikalischen Polymerisation in einem konventionellen 200 L-Reaktor wurden 0,7 kg Acrylsäure, 33,95 kg 2-Ethylhexylacrylat, 33,95 kg Butylacrylat, 1,4 kg Gylcidylmethacrylat, 23,35 kg Siedegrenzbenzin 60/95 und 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,5 h Reaktionszeit wurden 10,50 kg Siedegrenzbenzin 60/95 als Verdünnung hinzugegeben. Eine weitere Verdünnung erfolgte nach 7,5 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt. Anschließend wurden beide Polymerisate homogen miteinander im Verhältnis 2:3 gemischt.

Das Polymerengemisch wurde nach Testmethode C analysiert.

Anschließend wurde das Polymergemisch mit 37,5 Gew.-% Sylvares TP 95 (Terpen-Phenol-Harz mit einer Erweichungstemperatur von 95 °C) und 0,3 Gew.-% $ZnCl_2$ abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Beispiel 2b

Ein für radikalische Polymerisationen konventioneller 200 L-Reaktor wurde mit 0,7 kg Acrylsäure, 33,95 kg 2-Ethylhexylacrylat, 33,95 kg Butylacrylat, 1,4 kg Gylcidylmethacrylat und 46,7 kg Isopropanol befüllt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexyl-peroxydicarbonat (Perkadox 16®, Fa. Akzo Nobel) hinzugegeben. Nach 24 h Reaktionszeit wurde die Polymerisation abgebrochen und das Reaktionsgefäß auf Raumtemperatur abgekühlt. Das Polymer wurde nach Testmethode C analysiert.

In einer zweiten radikalischen Polymerisation in einem konventionellen 200 L-Reaktor wurden 0,7 kg Acrylsäure, 33,95 kg 2-Ethylhexylacrylat, 33,95 kg Butylacrylat, 1,4 kg Gylcidylmethacrylat, 23,35 kg Siedegrenzbenzin 60/95 und 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,5 h Reaktionszeit wurden 10,50 kg Siedegrenzbenzin 60/95 als Verdünnung hinzugegeben. Eine weitere Verdünnung erfolgte nach 7,5 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt.

Anschließend wurden beide Polymerisate homogen miteinander im Verhältnis 2:3 gemischt. Das Polymerengemisch wurde nach Testmethode C analysiert.

Anschließend wurde das Polymergemisch mit 37,5 Gew.-% Sylvares TP 95 (Terpen-Phenol-Harz mit einer Erweichungstemperatur von 95 °C) und 0,3 Gew.-% $ZnCl_2$ abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Beispiel 2c

Ein für radikalische Polymerisationen konventioneller 200 L-Reaktor wurde mit 0,8 kg Acrylsäure, 38,8 kg 2-Ethylhexylacrylat, 38,8 kg Butylacrylat, 1,6 kg Gylcidylmethacrylat, 21,54 kg Aceton und 21,54 kg Siedegrenzbenzin 60/95 befüllt. Nachdem 45 Minuten Stickstoffgas unter Rühren durch die Reaktionslösung geleitet worden war, wurde der Reaktor auf 58 °C geheizt und 0,024 kg Vazo 67™ (Fa. DuPont) gelöst in 0,40 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,056 kg Vazo 67™ (Fa. DuPont) gelöst in 0,40 kg Aceton hinzugegeben. Nach 1,5 h Reaktionszeit wurden 16,0 kg Isopropanol hinzugegeben. Nach 3,25 h Polymerisationszeit wurden 12 kg Siedegrenzbenzin 60/95 addiert. Nach 5,5 h Reaktionszeit erfolgte die Zugabe von 0,12 kg Dicyclohexylperoxydicarbonat (Perkadox 16®, Fa. Akzo Nobel). Nach 6 h wurden 12 kg Siedegrenzbenzin 60/95 hinzugegeben. Nach 7 h Reaktionszeit erfolgte nochmals eine Zugabe von 0,12 kg Dicyclohexylperoxydicarbonat (Perkadox 16®, Fa. Akzo Nobel). Nach 24 h Reaktionszeit wurde die Polymerisation abgebrochen und das Reaktionsgefäß auf Raumtemperatur abgekühlt. Das Polymer wurde nach Testmethode C analysiert.

Anschließend wurde das Polymer mit 37,5 Gew.-% Sylvares TP 95 (Terpen-Phenol-Harz mit einer Erweichungstemperatur von 95 °C) und 0,3 Gew.-% $ZnCl_2$ abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Beispiel 2d

Ein für radikalische Polymerisationen konventioneller 200 L-Reaktor wurde mit 2,4 kg Acrylsäure, 38,0 kg 2-Ethylhexylacrylat, 38,0 kg Butylacrylat, 1,6 kg Gylcidylmethacrylat, 21,54 kg Aceton und 21,54 kg Siedegrenzbenzin 60/95 befüllt. Nachdem 45 Minuten Stickstoffgas unter Rühren durch die Reaktionslösung geleitet worden war, wurde der Reaktor auf 58 °C geheizt und 0,024 kg Vazo 67™ (Fa. DuPont) gelöst in 0,40 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,056 kg Vazo 67™ (Fa. DuPont) gelöst in 0,40 kg Aceton hinzugegeben. Nach 1,5 h Reaktionszeit wurden 0,24 kg Bis-2,2'-phenylethyltrithiocarbonat hinzugegeben. Nach 5,5 h Reaktionszeit erfolgte die Zugabe von 0,12 kg Dicyclohexylperoxydicarbonat (Perkadox 16®, Fa. Akzo Nobel). Nach 7,5 h wurden 12 kg Siedegrenzbenzin 60/95 hinzugegeben. Nach 24 h Reaktionszeit wurde die Polymerisation abgebrochen und das Reaktionsgefäß auf Raumtemperatur abgekühlt.

Anschließend wurde das Polymer mit 37,5 Gew.-% Sylvares TP 95 (Terpen-Phenol-Harz mit einer Erweichungstemperatur von 95 °C) und 0,3 Gew.-% $ZnCl_2$ abgemischt (Gew.-% jeweils bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Referenz 3

In einer radikalischen Polymerisation in einem konventionellen 200 L-Reaktor wurden 4,9 kg Acrylsäure, 14,0 kg Methylacrylat, 51,1 kg 2-Ethylhexylacrylat, 23,35 kg Siedegrenzbenzin 60/95 und 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,0 h Reaktionszeit wurden 10,50 kg Siedegrenzbenzin 60/95 als Verdünnung hinzugegeben. Eine weitere Verdünnung erfolgte nach 5,0 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt.

Anschließend wurde das Polymer mit 0,4 Gew.-% Aluminiumchelat abgemischt (Gew.-% bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Referenz 3a

Ein für radikalische Polymerisationen konventioneller 200 L-Reaktor wurde mit 4,9 kg Acrylsäure, 14,0 kg Methylacrylat, 51,1 kg 2-Ethylhexylacrylat und 46,7 kg Isopropanol befüllt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 24 h Reaktionszeit wurde die Polymerisation abgebrochen und das Reaktionsgefäß auf Raumtemperatur abgekühlt.

In einer radikalischen Polymerisation in einem konventionellen 200 L-Reaktor wurden 4,9 kg Acrylsäure, 14,0 kg Methylacrylat, 51,1 kg 2-Ethylhexylacrylat, 23,35 kg Siedegrenzbenzin 60/95 und 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,0 h Reaktionszeit wurden 10,50 kg Siedegrenzbenzin 60/95 als Verdünnung hinzugegeben. Eine weitere Verdünnung erfolgte nach 5.0 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt.

Anschließend wurden beide Polymerisate homogen miteinander im Verhältnis 1:1 gemischt.

Anschließend wurde das Polymergemisch mit 0,4 Gew.-% Aluminiumchelat abgemischt (Gew.-% bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Referenz 4

In einer radikalischen Polymerisation in einem konventionellen 200 L-Reaktor wurden 4,9 kg Acrylsäure, 14,0 kg Methacrylat, 49,7 kg 2-Ethylhexylacrylat, 1,4 kg Glycidylmethacrylat, 23,35 kg Siedegrenzbenzin 60/95 und 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,0 h Reaktionszeit wurden 10,50 kg Siedegrenzbenzin 60/95 als Verdünnung hinzugegeben. Eine weitere Verdünnung erfolgte nach 5.0 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt.

Anschließend wurde das Polymer mit 0,3 Gew.-% ZnCl$_2$ abgemischt (Gew.-% bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

Beispiel 4a

Ein für radikalische Polymerisationen konventioneller 200 L-Reaktor wurde mit 4,9 kg Acrylsäure, 14,0 kg Methacrylat, 49,7 kg 2-Ethylhexylacrylat, 1,4 kg Glycidylmethacrylat und 46,7 kg Isopropanol befüllt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 24 h Reaktionszeit wurde die Polymerisation abgebrochen und das Reaktionsgefäß auf Raumtemperatur abgekühlt.

In einer radikalischen Polymerisation in einem konventionellen 200 L-Reaktor wurden 4,9 kg Acrylsäure, 14,0 kg Methacrylat, 49,7 kg 2-Ethylhexylacrylat, 1,4 kg Glycidylmethacrylat, 23,35 kg Siedegrenzbenzin 60/95 und 23,35 kg Aceton vorgelegt. Nachdem 45 Minuten Stickstoffgas unter Rühren durch die Reaktionslösung geleitet worden war, wurde der Reaktor auf 58 °C geheizt und 0,07 kg Vazo 67™ (Fa. DuPont) gelöst in 0,35 kg Aceton hinzugegeben. Anschließend wurde das äußere Heizbad auf 75 °C erwärmt und die Reaktion konstant bei dieser Außentemperatur durchgeführt. Nach 1 h Reaktionszeit wurden 0,07 kg Vazo 67™ (Fa. DuPont) gelöst in 0,35 kg Aceton hinzugegeben. Nach 2,5 h Reaktionszeit wurden 0,091 kg Dicyclohexylperoxydicarbonat (Perkadox 16®, Fa. Akzo Nobel) hinzugegeben. Nach 3,0 h Reaktionszeit wurden 10,50 kg Siedegrenzbenzin 60/95 als Verdünnung hinzugegeben. Eine weitere Verdünnung erfolgte nach 5,0 h mittels Zugabe von 10,5 kg Siedegrenzbenzin 60/95. Nach 24 h Reaktionszeit wurde die Polymerisation abgebrochen und das Reaktionsgefäß auf Raumtemperatur abgekühlt.

Anschließend wurden beide Polymerisate homogen miteinander im Verhältnis 1:1 gemischt.

Anschließend wurde das Polymergemisch mit 0,3 Gew.-% ZnCl$_2$ abgemischt (Gew.-% bezogen auf das Polymer) und aus Lösung auf eine mit Saran geprimerte 23 $\mu$m dicke PET-Folie aufgetragen und für 15 Minuten bei 120 °C getrocknet. Der Masseauftrag betrug nach der Trocknung 50 g/m$^2$.

**Ergebnisse**

In Tabelle 1 sind für ausgewählte Beispiele die Ergebnisse aus der Gelpermeationschromatographie dargestellt.

Tabelle 1

| | $M_w$[g/mol] Test D | $M_w$/$M_n$ Test D | $M_1$[g/mol] Test D | $M_2$ [g/mol] Test D |
|---|---|---|---|---|
| Referenz 1 | 598500 | 4,60 | 767000 | - |
| Referenz 1a | 386000 | 9,10 | 714000 | 112000 |
| Referenz 1b | 356000 | 16,46 | 697000 | 79400 |
| Referenz 1c | 503000 | 11,70 | 802500 | 356000 |
| Referenz 1d | 557000 | 7,8 | 673000 | 427000 |
| Referenz 2 | 3150000 | 32,13 | 3450000 | - |
| Beispiel 2a | 973000 | 34,01 | 2610000 | 84600 |
| Beispiel 2b | 892000 | 56,66 | 2830000 | 54700 |
| Beispiel 2c | 943000 | 40,49 | 708000 | 46700 |
| Beispiel 2d | 723000 | 37,31 | 951000 | 85600 |
| Referenz 3 | 1140000 | 16,31 | 727000 | - |
| Referenz 3a | 328000 | 27,82 | 673000 | 28900 |
| Referenz 4 | 1220000 | 24,50 | 370000 | - |
| Beispiel 4a | 857000 | 31,62 | 1134000 | 91300 |

$M_w$ gewichtsmittleres Molekulargewicht

$M_w$/$M_n$ Polydispersität D

$M_1$, $M_2$ Molekulargewichtspeak im GPC, für Population 1 und 2 respektive (für die monomodalen Referenzbeispiele wird der Molekulargewichtspeak ebenfalls mit $M_1$ bezeichnet)

Die Referenzen 1 a-b und 3a sowie die Beispiele 2a und 4a wurden aus zwei unterschiedlichen Polymeren mit unterschiedlicher Molekulargewichtsverteilung hergestellt. Die Referenzen 1c-d und die Beispiele 2c-d sind aus Ein-Topf-Polymerisationen entstanden, in denen als Regler Isopropanol (Referenz 1c, Beispiel 2c) bzw, Bis-2,2'-phenylethyltrithlocarbonat (Referenz 1d, Beispiele 2b, 2d) eingesetzt wurden. Die Referenzen 1, 2, 3 und 4 besitzen keine bimodalen Verteilungen.

Im Vergleich zu den Referenzen 1, 2, 3 und 4 weisen die durch Mischung zweier unterschiedlicher Polyacrylate sowie die durch geregelte Ein-Topf-Polymerisation hergestellten Polymere eine bimodale Molmassenverteilung auf. Die Polydispersität D = $M_w$/$M_n$ liegt in allen Fällen oberhalb der Referenzen 1, 2, 3, und 4. Die Referenzen 1a-d und 3a sowie die Beispiele 2a-c und 4a weisen jeweils zwei Peaks im GPC Spektrum auf, wobei die Peaks deutlich auseinander liegen. Somit wird das Kriterium einer bimodalen Verteilung erfüllt.

In der folgenden Tabelle 2 werden die klebtechnischen Eigenschaften der einzelnen Beispiele aufgelistet und miteinander verglichen.

Tabelle 2

| | SSZ 10N, RT [min] (Test A) | SAFT Test 0,05 N, 30 - 200 °C (Test B) | KK PE [N/cm] (Test C) |
|---|---|---|---|
| Referenz 1 | 1355 | 1000 $\mu$m / 147 °C | 3,2 |
| Referenz 1a | 897 | 1000 $\mu$m / 126 °C | 3,9 |
| Referenz 1b | 733 | 1000 $\mu$m / 114 °C | 4,0 |
| Referenz 1c | 1016 | 1000 $\mu$m / 129 °C | 4,0 |
| Referenz 1d | 1172 | 1000 $\mu$m / 134 °C | \|3,9 |

(fortgesetzt)

| | SSZ 10N, RT [min] (Test A) | SAFT Test 0,05 N, 30 - 200 °C (Test B) | KK PE [N/cm] (Test C) |
|---|---|---|---|
| Referenz 2 | 3320 | 334 μm / 200 °C | 3,8 |
| Beispiel 2a | 1547 | 436 μm / 200 °C | 4.8 |
| Beispiel 2b | 1676 | 352 μm / 200 °C | 4,8 |
| Beispiel 2c | 5470 | 417 μm / 200 °C | 4,7 |
| Beispiel 2d | 7156 | 364 μm / 200 °C | 4,6 |
| Referenz 3 | 10000 | 1000 μm / 188 °C | 0,8 |
| Referenz 3a | 10000 | 1000 μm / 167 °C | 1,4 |
| Referenz 4 | 10000 | 73 μm / 200 °C | 0,9 |
| Beispiel 4a | 10000 | 94 μm / 200 °C | 1,3 |
| SSZ: Scherstandzeiten SAFT Test: Shear Adhesion Failure Temperature Test KK PE: Klebkraft Polyethylen RT: Raumtemperatur | | | |

Die Beispiele 2a-b und 4a in Tabelle 2 belegen, dass im Vergleich zu den Referenzabmischungen mit der identischen Monomer- und Harzzusammensetzung signifikant höhere Verklebungsfestigkeit auf unpolaren Untergründen (PE) erreicht werden können. Des Weiteren zeigt ein SAFT-Test-Vergleich, dass gute Kohäsionseigenschaften bei erhöhten Temperaturen nur durch die GMA-haltigen Haftklebemassen (Referenzen 2 und 4, Beispiele 2a-c und 4a) gewährleistet werden, wohingegen die Haftklebemassen, die als funktionales Monomer nur Acrylsäure enthalten (Referenzen 1, 1a-d, 3 und 3a), in allen Fällen eine Scherstrecke von 1000 μm deutlich unterhalb der 200 °C-Grenze erreichen. Bei den Referenzen 3, 3a und 4 sowie für Beispiel 4a werden niedrige Adhäsionswerte auf PE gemessen, da es sich hier um harzfreie Reinacrylathaftkleber handelt.

Diese Erfindung betrifft eine Acrylathaftklebemasse mit einer bimodalen Molmassenverteilung, vorzugsweise in Verbindung mit zumindestens einem Klebrigmacher. Es hat sich gezeigt, dass die Haftklebstoffzusammensetzung zu einer unerwartet guten Kombination aus hoher Schäladhäsion und Anfassklebrigkeit (Tack) bei Raumtemperatur und hohem statischem Scherwiderstand bei erhöhten Temperaturen führt, die sich insbesondere für eine Verwendung dieser Haftkleberzusammensetzung für Applikationen, die eine Verklebung von Untergründen niedriger Oberflächenenergie beinhaltet, eignet. Darüber hinaus führt die Bimodalität der erfindungsgemäßen Acylathaftklebemasse ebenso zu sehr hoher Schäladhäsion auf Substraten, die neben niedrigen Oberflächenenergien zusätzlich eine hohe Oberflächenrauhigkeit und/oder niedrige Shore A Härten aufweisen. Verglichen mit den Haftklebemassen aus dem Stand der Technik kann eine deutliche Steigerung der Klebkraft insbesondere auch auf unpolaren Untergründen festgestellt werden. Bei den erfindungsgemäßen Haftklebemassen lässt sich eine besonders hohe Temperaturbeständigkeit feststellen. Die Haftklebstoffzusammensetzung kann hervorragend zur Herstellung eines einseitigen oder doppelseitigen Bandes eingesetzt werden oder als Befestigungsmittel in Produkten wie mechanischen Befestigungselementen eingesetzt werden.

**Patentansprüche**

**1.**   Polyacrylat

• mit wenigstens bimodaler Molekulargewichtsverteilung, charakterisiert durch zumindest zwei Maxima in der Molmassenverteilungskurve an den Stellen $M_1$ und $M_2$, mit $M_1 > M_2$,
• in dem formal betrachtet zumindest zwei Polymere $P_1$ und $P_2$ mit jeweils eigener Molekulargewichtsverteilung vorliegen, wobei das Polymer $P_1$ eine häufigste Molmasse $M_{max}(P_1)$ und das Polymer $P_2$ eine häufigste Molmasse $M_{max}(P_2)$ besitzt, wobei $M_{max}(P_1) > M_{max}(P_2)$,

**dadurch gekennzeichnet, dass**

• beide Polymere $P_1$ und $P_2$ jeweils auf einem Monomerengemisch basieren, enthaltend

(a) zumindest eine Monomersorte, gewählt aus der Gruppe der Acrylsäureester und der Methacrylsäureester der allgemeinen Formel

$$H_2C=CR^1\text{-}COOR^2$$

wobei $R^1$ = H oder $CH_3$ und wobei $R^2$ eine aliphatische Kohlenwasserstoffkette mit 4 bis 15 Kohlenstoffatomen darstellt;
(b) zumindest Glycidylacrylat und/oder Glycidylmethacrylat.

2. Polyacrylat nach Anspruch 1, **dadurch gekennzeichnet, dass** zumindest ein klebrigmachenden Harz zugemischt ist, insbesondere mit einem Gewichtsanteil von 0 - 50 Gew-%, bezogen auf das Polyacrylat.

3. Verfahren zur Herstellung eines Polyacrylats mit wenigstens bimodaler Molekulargewichtsverteilung, charakterisiert durch zumindest zwei Maxima in der Molmassenverteilungskurve an den Stellen $M_1$ und $M_2$. mit $M_1 > M_2$, bei dem ein Monomerengemisch enthaltend

(a) zumindest eine Monomersorte, gewählt aus der Gruppe der Acrylsäureester und der Methacrylsäureester der allgemeinen Formel

$$H_2C=CR^1\text{-}COOR^2$$

wobei $R^1$ = H oder $CH_3$ und wobei $R^2$ eine aliphatische Kohlenwasserstoffkette mit 4 bis 15 Kohlenstoffatomen darstellt;
(b) zumindest Glycidylacrylat und/oder Glycidylmethacrylat,

in einer wenigstens zweiphasigen radikalischen Polymerisation, bei der

s1) in der ersten Reaktionsphase zunächst eine geringe Initiatormenge zu der Monomermischung gegeben wird und ein erstes Polymerisat $P_1$ mit einer häufigsten Molmasse $M_{max}(P_1)$ hergestellt wird, und
s2) vor der vollständigen Umsetzung der Monomerenmischung durch wenigstens einmaligen Einsatz eines Reglers eine nächste Phase der Polymerisation gestartet wird, bei der ein zweites Polymerisat $P_2$ mit einer geringeren häufigsten Molmasse $M_{max}(P_2)$ hergestellt wird, so dass $M_{max}(P_1) > M_{max}(P_2)$,

zu einem Polyacrylat mit wenigstens bimodaler Molekulargewichtsverteilung polymerisiert wird, und bei dem das Polyacrylat in einer weiteren Phase mittels thermischer Energie vernetzt wird.

4. Verfahren nach Anspruch 3, **dadurch gekennzeichnet, dass** dem Polyacrylat vor der thermischen Vernetzung zumindest ein klebrigmachenden Harz zugemischt wird, insbesondere mit einem Gewichtsanteil von 0 - 50 Gew-%, bezogen auf das Polyacrylat.

5. Vernetztes Polyacrylat, erhältlich durch ein Verfahren nach zumindest einem der Ansprüche 3 und 4.

**Claims**

1. Polyacrylate

• having an at least bimodal molecular weight distribution, **characterized by** at least two maxima in the molar mass distribution curve, at points $M_1$ and $M_2$, with $M_1 > M_2$,
• in which, viewed formally, there are at least two polymers, $P_1$ and $P_2$, each having their own molecular weight distribution, the polymer $P_1$ possessing a most frequent molar mass $M_{max}(P_1)$ and the polymer $P_2$ possessing a most frequent molar mass $M_{max}(P_2)$, where $M_{max}(P_1) > M_{max}(P_2)$,

**characterized in that**

• both polymers $P_1$ and $P_2$ are in each case based on a monomer mixture comprising

(a) at least one monomer type selected from the group of the acrylic esters and of the methacrylic esters of the general formula

$$H_eC=CR^1\text{-}COOR^2$$

where $R^1$ = H or $CH_3$ and where $R^2$ represents an aliphatic hydrocarbon chain having 4 to 15 carbon atoms;
(b) at least glycidyl acrylate and/or glycidyl methacrylate.

2. Polyacrylate according to Claim 1, **characterized in that** at least one tackifying resin has been admixed, in particular with a weight fraction of 0%-50% by weight, based on the polyacrylate.

3. Process for preparing a polyacrylate having an at least bimodal molecular weight distribution, **characterized by** at least two maxima in the molar mass distribution curve, at points $M_1$ and $M_2$, with $M_1 > M_2$, wherein a monomer mixture comprising

(a) at least one monomer type selected from the group of the acrylic esters and of the methacrylic esters of the general formula

$$H_2C=CR^1\text{-}COOR^2$$

where $R^1$ = H or $CH_3$ and where $R^2$ represents an aliphatic hydrocarbon chain having 4 to 15 carbon atoms;
(b) at least glycidyl acrylate and/or glycidyl methacrylate,

is polymerized in an at least two-phase free-radical polymerization, wherein

s1) in the first reaction phase first a small amount of initiator is added to the monomer mixture and a first polymer $P_1$ is prepared, having a most frequent molar mass $M_{max}(P_1)$,
s2) before the complete reaction of the monomer mixture, by at least single deployment of a regulator, a next polymerization phase is initiated, wherein a second polymer $P_2$ is prepared, having a lower most frequent molar mass $M_{max}(P_2)$ so that $M_{max}(P_1) > M_{max}(P_2)$,

to give a polyacrylate having an at least bimodal molecular weight distribution,
and wherein the polyacrylate in a further phase is crosslinked by means of thermal energy.

4. Process according to Claim 3, **characterized in that** the polyacrylate prior to thermal crosslinking is admixed with at least one tackifying resin, in particular with a weight fraction of 0%-50% by weight, based on the polyacrylate.

5. Crosslinked polyacrylate obtainable by a process according to at least one of Claims 3 and 4.

**Revendications**

1. Polyacrylate

- présentant une distribution du poids moléculaire au moins bimodale, **caractérisée par** au moins deux maxima sur la courbe de distribution de la masse molaire aux emplacements $M_1$ et $M_2$, avec $M_1 > M_2$,
- dans lequel au moins deux polymères $P_1$ et $P_2$ sont formellement présents, présentant chacun une distribution du poids moléculaire distincte, le polymère $P_1$ ayant une masse molaire la plus fréquente $M_{max}(P_1)$ et le polymère $P_2$ ayant une masse molaire la plus fréquente $M_{max}(P_1)$, avec $M_{max}(P_1) > M_{max}(P_2)$,

**caractérisé en ce que**

- les deux polymères $P_1$ et $P_2$ sont chacun à base d'un mélange de monomères contenant

(a) au moins un type de monomère choisi dans le groupe constitué par les esters de l'acide acrylique et les esters de l'acide méthacrylique de formule générale

$$H_2C=CR^1\text{-}COOR^2$$

avec $R^1$ = H ou $CH_3$ et $R^2$ représentant une chaîne hydrocarbonée aliphatique de 4 à 15 atomes de carbone ;
(b) au moins de l'acrylate de glycidyle et/ou du méthacrylate de glycidyle.

2. Polyacrylate selon la revendication 1, **caractérisé en ce qu'**au moins une résine collante est incorporée, notamment en une proportion en poids de 0 à 50 % en poids, par rapport au polyacrylate.

3. Procédé de fabrication d'un polyacrylate présentant une distribution du poids moléculaire au moins bimodale, **caractérisée par** au moins deux maxima sur la courbe de distribution de la masse molaire aux emplacements $M_1$ et $M_2$, avec $M_1 > M_2$, selon lequel un mélange de monomères contenant

(a) au moins un type de monomère choisi dans le groupe constitué par les esters de l'acide acrylique et les esters de l'acide méthacrylique de formule générale

$$H_2C=CR^1\text{-}COOR^2$$

avec $R^1$ = H ou $CH_3$ et $R^2$ représentant une chaîne hydrocarbonée aliphatique de 4 à 15 atomes de carbone ;
(b) au moins de l'acrylate de glycidyle et/ou du méthacrylate de glycidyle,

est polymérisé par une polymérisation radicalaire au moins biphasée, selon laquelle

s1) lors de la première phase de réaction, une petite quantité d'initiateur est tout d'abord ajoutée au mélange de monomères et un premier polymère $P_1$ ayant une masse molaire la plus fréquente $M_{max}(P_1)$ est fabriqué, et
s2) avant la transformation totale du mélange de monomères, une phase suivante de la polymérisation est démarrée par l'utilisation à au moins une reprise d'un régulateur, lors de laquelle un deuxième polymère $P_2$ ayant une masse molaire la plus fréquente $M_{max}(P_2)$ est fabriqué, de sorte que $M_{max}(P_1) > M_{max}(P_2)$,

en un polyacrylate présentant une distribution du poids moléculaire au moins bimodale, et selon lequel le polyacrylate est réticulé lors d'une phase ultérieure par de l'énergie thermique.

4. Procédé selon la revendication 3, **caractérisé en ce qu'**au moins une résine collante est incorporée dans le polyacrylate avant la réticulation thermique, notamment en une proportion en poids de 0 à 50 % en poids, par rapport au polyacrylate.

5. Polyacrylate réticulé, pouvant être obtenu par un procédé selon au moins 1"une quelconque des revendications 3 et 4.

**IN DER BESCHREIBUNG AUFGEFÜHRTE DOKUMENTE**

**In der Beschreibung aufgeführte Patentdokumente**

- US 5602221 A, Bennett
- EP 0528304 A2
- EP 1634909 A1
- US 4501845 A
- DE 10259458 A
- EP 1361260 B1

**In der Beschreibung aufgeführte Nicht-Patentliteratur**

- **T.G. FOX.** Bull. Am. Phys. Soc. 1956, vol. 1, 123
- **HOUBEN WEYL.** *Methoden der Organischen Chemie,* vol. E (19a), 60-147